**Europäisches Patentamt**

**(19) European Patent Office**

**Office européen des brevets**

(11) Publication number : **0 393 082 B1**

(12) **EUROPEAN PATENT SPECIFICATION**

(45) Date of publication of patent specification :
23.09.92 Bulletin 92/39

(51) Int. Cl.⁵ : **F16B 11/00**

(21) Application number : **88909768.9**

(22) Date of filing : **31.10.88**

(86) International application number :
**PCT/FI88/00177**

(87) International publication number :
**WO 89/04430 18.05.89 Gazette 89/11**

(54) **METHOD FOR FIXING A CROSSBAR TO A BORDER PROP, PARTICULARLY IN A CABLE RACK, AND A JOINT THUS MADE AS WELL AS A BAR PROFILE FOR SAID JOINT.**

(30) Priority : **03.11.87 FI 874841**

(43) Date of publication of application :
**24.10.90 Bulletin 90/43**

(45) Publication of the grant of the patent :
**23.09.92 Bulletin 92/39**

(84) Designated Contracting States :
**AT BE CH DE FR GB IT LI LU NL SE**

(56) References cited :
**DE-A- 2 414 268**
**GB-A- 2 068 493**
**SE-B- 300 729**
**SE-B- 327 313**

(73) Proprietor : **NOKIA ALUMIINI OY**
**Heikkiläntie 7**
**SF-00210 Helsinki (FI)**

(72) Inventor : **HOTANEN, Martti**
**Hevosmäki 1**
**SF-02410 Kirkkonummi (FI)**

(74) Representative : **Popp, Eugen, Dr. et al**
**MEISSNER, BOLTE & PARTNER**
**Widenmayerstrasse 48 Postfach 86 06 24**
**W-8000 München 86 (DE)**

## Description

This invention relates to a method for fixing a crossbar to a border prop, particularly in a cable rack, according to which method
- the crossbar is positioned with its end surface against a web plate of the border prop,
- the crossbar is secured to the border prop by means of fixing elements extending from the end surface of the crossbar through the web plate of the border prop, and
- a counterpart supporting the web plate in the region of the end surface of the crossbar is positioned at the fixing point of the crossbar, against the web plate of the border prop, and
- the web plate is supported by a counterpart in the region of the end surface of the crossbar.

Such a method is for example known from GB-A-2068493

To guide electric cables in groups from one location to another, so called cable racks are used in factory halls, passageways and similar spaces, said cable racks being fixed to the ceiling or walls of said spaces and the cables being installed to rest on said cable racks.

Cable racks are manufactured of separate parts formed by metallic profile bars, i.e. of two border props and a plurality of crossbars which are assembled into a supporting ladder of a U- or H-shaped cross-section. To provide a rigid, firm structure, the crossbars must be secured with their ends to the border props either by welding or mechanically.

Carrying out the fixing of the crossbars by welding, e.g. Finnish Patent No. 37 418, it is difficult to produce neat work, and welding will diminish the strength of the props and crossbars when said parts are manufactured of extruded aluminium profile bars. Welding requires of the crossbar a certain thickness and is more difficult to automatize than fixing carried out mechanically.

On the other hand, mechanical fixing requires punching of some kind of fixing tongues at the ends of the crossbars and punching respective cuts in the border props and upsetting or twisting said tongues after the tongues have been pushed through the cuts. The mechanical fixing method is thus both laborious and slow and has generally been based on working the ends of the severed crossbar into fixing tongues.

Finnish patent publication No. 68 305 suggests a method on account of which the crossbar can be mechanically secured to the border prop without need of working any fixing tongues at the end of the crossbar. Even though this method considerably simplifies the joining of the crossbar and prop, it still requires punching of cuts in the border prop and additionally a certain cross-sectional profile for the web plate of the border prop at the junction point.

The object of this invention is to provide a method avoiding the above stated disadvantages and permitting the joining of the crossbar and prop simply and rapidly even at the installation site. This object is achieved by the method of the invention, which is characterized in
- that the web plate is supported in the region of the end surface of the crossbar, exclusive of the sites of the fixing elements of the crossbar, and
- that the end surface of the crossbar is pressed from the opposite side against the web plate of the border prop so that the wall of the crossbar is axially collapsed in the region supported by the counterpart, but cuts through the web plate of the border prop in the regions unsupported by the counterpart, forming said fixing elements extending through the web plate.

The invention is based on the idea that the crossbar itself is caused to punch into the border prop the holes that are required for the crossbar simply by pressing the end of the crossbar against the border prop and similarly to form at the end of the crossbar the fixing elements that are required for the crossbar. When the crossbar is pressed against the web plate of the border prop and the plate is supported from the opposite side with a suitable counterpart, those parts of the end of the crossbar at which there are recesses in the counterpart cut through the web plate, whereas those parts of the end of the crossbar against which there is a wall-supporting counterpart on the opposite side of the web plate of the border prop are collapsed against the web plate of the border prop without penetrating the plate. Thus the fixing elements required by the joint are formed automatically by means of mere compressive force which can be easily generated by simple compression means.

The locking of the peg-like fixing elements thus formed on the crossbar to the web plate of the border prop can also be effected in the same compression step wherein the fixing elements are formed. This can be realized so that the crossbar is pressed against the border prop so far that the ends of the fixing elements of the crossbar are upset against the counterpart.

The invention also relates to a joint made according to this method, comprising fixing elements extending from the end surface of the crossbar through the web plate of the border prop and secured to the web plate on the opposite side thereof. Such a joint is characterized in that the fixing elements of the crossbar protrude through holes punched by the fixing elements themselves into the web plate and that the crossbar walls between the fixing elements are axially collapsed at least the thickness of the web plate.

Such a joint can be simply produced, as has been stated in the above, and enables rigid attachment of the crossbar to the border prop. The joint does not require any special profile of the web plate of the border prop, but a smooth surface at the junction point is sufficient.

The invention also relates to a bar profile for a hollow crossbar suitable for carrying out the method. Such a bar profile is characterized in that the wall of the bar profile has at least one axial continuous expansion forming a fixing element extending through the web plate of the border prop in the ready joint, and that the wall elements associated with the expansion are so thin that they can be axially collapsed to be located with their end surfaces in a plane different from that of the end surface of the expansion.

Such a bar profile has the advantage that the crossbar can be cut from a bar profile into a piece of desired length whose end surfaces need not be worked in any way after right-angled cutting. Thus, subsequent to cutting the crossbar is ready as such to be disposed with its planar end surface against the planar surface of the border prop and to be secured to the prop.

The following is a more detailed description of the invention with reference to the accompanying drawings, wherein

Figure 1 is a perspective view of a cable rack wherein the fixing method of the invention has been implemented,

Figure 2 shows in a larger size a crossbar and a border prop as well as a counterpart for a cable rack, detached from one another prior to the fixing of the crossbar,

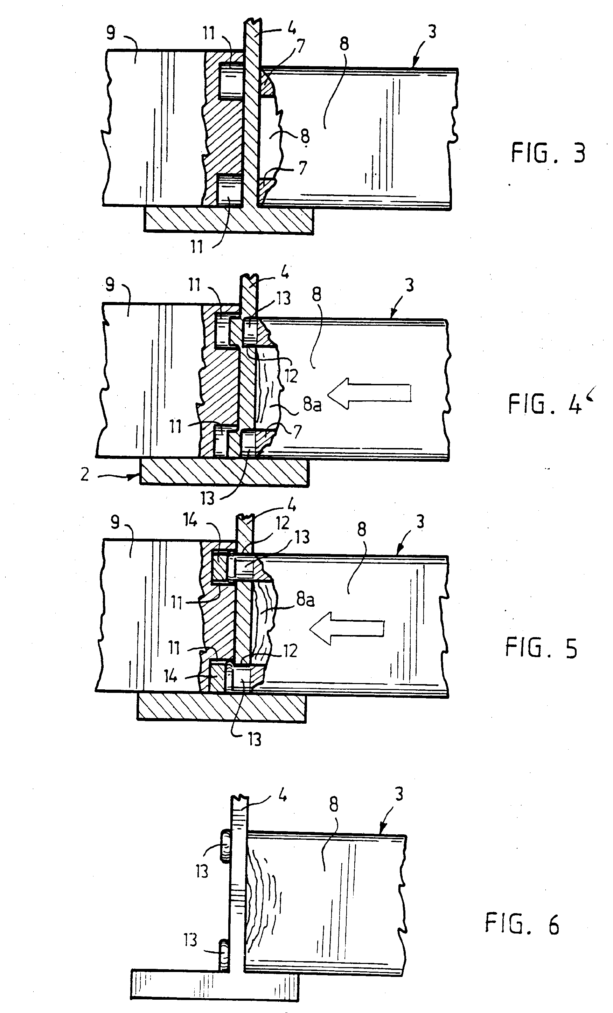

Figures 3, 4 and 5 are side projections of the steps of producing a joint between the crossbar and prop at the beginning, intermediate step, and end of the fixing respectively,

Figure 6 shows a ready joint seen in the direction of the prop, and

Figures 7 and 8 are perspective views of a crossbar cut from a profile bar prior to the manufacturing of the joint and thereafter, respectively.

The cable rack 1 shown in the drawings is ladder-like and has a U-shaped cross-section, comprising two spaced-apart parallel border props 2 interconnected with a plurality of crossbars 3 spaced apart in the longitudinal direction of the props. The border props and crossbars have been cut into pieces of a suitable length from metal, preferably aluminum, profile bars.

The border prop 2 forms a Planar web plate 4 and lengthwise reinforcement flanges 5 pertaining thereto.

The crossbar 3 is constituted by a hollow piece of a substantially right-angled cross-section, and the crossbar has planar end surfaces 6 located perpendicularly to the longitudinal axis of the crossbar. Each corner of the crossbar has a lengthwise expansion 7 of a circular cross-section, and the expansions are connected relatively thin walls 8.

To fix the border prop and crossbar to one another, the crossbar is disposed with its end surface 6 against the web plate 4 of the prop. On the opposite side of the fixing point, a counterpart 9 is positioned against the web plate, the end surface 10 of said counterpart corresponding to at least the end surface of the crossbar exclusive of the regions corresponding to the expansions of the crossbar, at which regions the end surface of the counterpart has cylindrical recesses 11. The recess 11 has a diameter slightly greater than the diameter of the expansion 7 of the crossbar.

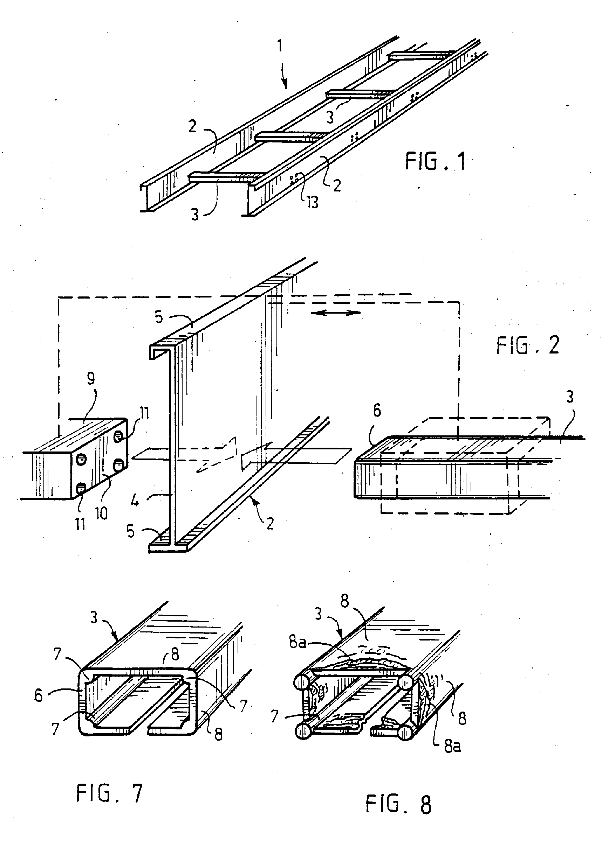

The counterpart has been secured to a compression tool having gripping means which can be adjusted to grip the crossbar in an axially non-slidable manner and which can be forced toward the counterpart. The tool has been shown only schematically in Figure 2 by dotted lines.

When the crossbar is pressed by means of the tool against the web plate of the border prop simultaneously as the counterpart is tightly pressed from the opposite side against the web plate, the expansions 7 of the crossbar cut through the web plate, whereas the wall sections 8 of the crossbar are axially collapsed, 8a, the counterpart serving as an anvil on the opposite side of the web plate. The expansions of the crossbar thus punch round holes 12 into the web plate and form cylindrical fixing pegs 13 extending through the web plate. When the pressing of the crossbar against the web plate is still slightly continued, the ends of the fixing pegs are pressed, by means of the punch-severed piece of plate 14, against the bottoms of the recesses 11 in the counterpart, so that the ends of the pegs are upset and secure the fixing pegs to the web plate. The counterpart may be provided with suitable means reliably pushing the punch-severed piece of plate out from the recess after the removal of the counterpart.

It is noted that no cuts or the like need be made in the border prop in advance, but the web plate may have a smooth fixing surface, and that no protrusions or the like need be made at the end of the crossbar, but a straight-cut planar end surface is sufficient. The fixing method is very rapid, and the necessary compression means is of a simple construction.

The drawing and the description pertaining thereto are intended merely to illustrate the idea of the invention. Even though the invention has been explained in the foregoing mainly in connection with a cable rack, it is evident that the fixing method according to the invention is suitable for application to the production of other objects as well, said objects involving securing a bar to a plate-like element. The expansions forming the fixing elements may vary in their form and location considerably, depending on the joint involved in each case. The invention can thus vary within the scope of the claims.

## Claims

1. A method for fixing a crossbar (3) to a border prop (2), particularly in a cable rack (1), according to which method

– the crossbar (3) is positioned with its end surface (6) against a web plate (4) of the border prop (2),

– the crossbar is secured to the border prop by means of fixing elements (13) extending from the end surface of the crossbar through the web plate of the border prop,

– a counterpart (9) supporting the web plate in the region of the end surface (6) of the crossbar is positioned at the fixing point of the crossbar (3), against the web plate (4) of the border prop (2), and

– the web plate (4) is supported by a counterpart (9) in the region of the end surface of the crossbar, **characterized** in

– that the web plate (4) is supported by the counterpart (9) in the end surface region exclusive of the sites of the fixing elements (13) of the crossbar, and

– that the planar end surface (6) of the crossbar is pressed from the opposite side against the web plate (4) of the border prop so that a wall (8) of the crossbar is axially collapsed (8a) in the region supported by the counterpart, but cuts through the web plate of the border prop in the regions unsupported by the counterpart, forming said fixing elements (13) extending through the web plate.

2. A method as claimed in claim 1, **characterized** in that the crossbar (3) is pressed against the border prop (2) so far that the ends of the fixing elements (13) of the crossbar are upset against the counterpart (9).

3. A method as claimed in claim 1 or 2, **characterized** in that the crossbar (3) is cut perpendicularly to the longitudinal axis thereof and that the planar end surface (6) of the crossbar is pressed against the planar surface of the web plate (4) of the border prop (2).

4. A joint between a crossbar and a border prop, comprising fixing elements (13) extending from an end surface (6) of the crossbar (3) through a web plate (4) of the border prop (2) and fixed to said web plate on the opposite side thereof, **characterized** in that the fixing elements (13) of the crossbar (3) extend through holes (12) punched by the fixing elements themselves into the web plate and that the walls (8) of the crossbar between the fixing elements are axially collapsed (8a) at least the thickness of the web plate.

5. A joint as claimed in claim 4, **characterized** in that the walls (8) of the crossbar (3) are collapsed (8a) more than the thickness of the web plate (4) of the border prop (2) and that the protruding ends of the fixing elements (13) have been upset against the web plate.

6. A bar profile for a hollow crossbar (3) to be fixed to a border prop (2), **characterized** in that a wall of the bar profile has at least one axial continuous expansion (7) forming in a ready joint a fixing element (13) extending through a web plate (4) of the border prop, and that the wall sections (8) associated with the expansion are so thin that they can be axially collapsed (8a) to be located with their end surfaces in a plane different from that of the end surface of the expansion (7).

7. A bar profile as claimed in claim 6, **characterized** in that the expansion (7) is solid.

## Patentansprüche

1. Verfahren zum Befestigen einer Sprosse (3) an einer Rahmenstrebe (2), insbesondere in einem Kabelgestell (1), wobei gemäß diesem Verfahren

– die Sprosse (3) mit ihrer Endfläche (6) an einem Stegblech (4) der Rahmenstrebe (2) positioniert wird,

– die Sprosse an der Rahmenstrebe durch Befestigungselemente (13) befestigt wird, die von der Endfläche der Sprosse durch das Stegblech der Rahmenstrebe verlaufen,

– ein Gegenhalter (9), der das Stegblech im Bereich der Endfläche (6) der Sprosse haltert, an dem Befestigungspunkt der Sprosse (3) an der Stegplatte (4) der Rahmenstrebe (2) positioniert wird, und

– das Stegblech (4) von einem Gegenhalter (9) im Bereich der Endfläche der Sprosse gehaltert wird,

**dadurch gekennzeichnet ,**

– daß das Stegblech (4) von dem Gegenhalter (9) in dem Endflächenbereich mit Ausnahme der Stellen der Befestigungselemente (13) der Sprosse gehalten wird und

– daß die ebene Endfläche (6) der Sprosse von der entgegengesetzten Seite gegen das Stegblech (4) der Rahmenstrebe gepreßt wird, so daß eine wand (8) der Sprosse in dem von dem Gegenhalter gehalterten Bereich in Axialrichtung einknickt (8a), aber in den von dem Gegenhalter nicht abgestützten Bereichen das Stegblech der Rahmenstrebe durchschneidet unter Bildung der Befestigungselemente (13), die das Stegblech durchsetzen.

2. Verfahren nach Anspruch 1, **dadurch gekennzeichnet ,**

daß die Sprosse (3) so weit gegen die Rahmenstrebe (2) gepreßt wird, daß die Enden der Befestigungselemente (13) der Sprosse gegen den Gegenhalter (9) gestaucht werden.

3. Verfahren nach Anspruch 1 oder 2,
**dadurch gekennzeichnet**,
daß die Sprosse (3) senkrecht zu ihrer Längsachse abgeschnitten wird und daß die ebene Endfläche (6) der Sprosse gegen die ebene Fläche des Stegblechs (4) der Rahmenstrebe (2) gepreßt wird.

4. Verbindung zwischen einer Sprosse und einer Rahmenstrebe, die Befestigungselemente (13) aufweist, die von einer Endfläche (6) der Sprosse (3) durch ein Stegblech (4) der Rahmenstrebe (2) verlaufen und an dem Stegblech auf dessen entgegengesetzter Seite festgelegt sind,
**dadurch gekennzeichnet**,
daß die Befestigungselemente (13) der Sprosse (3) Löcher (12) durchsetzen, die von den Befestigungselementen selbst in das Stegblech gestanzt sind, und daß die wände (8) der Sprosse zwischen den Befestigungselementen um wenigstens die Dicke des Stegblechs in Axialrichtung eingeknickt (8a) sind.

5. Verbindung nach Anspruch 4,
**dadurch gekennzeichnet**,
daß die wände (8) der Sprosse (3) um mehr als die Dicke des Stegblechs (4) der Rahmenstrebe (2) eingeknickt (8a) sind und daß die vorspringenden Enden der Befestigungselemente (13) gegen das Stegblech gestaucht sind.

6. Stabprofil für eine hohle Sprosse (3), die an einer Rahmenstrebe (2) zu befestigen ist,
**dadurch gekennzeichnet**,
daß eine wand des Stabprofils wenigstens eine in Axialrichtung fortlaufende Verbreiterung (7) hat, die in einer fertigen Verbindung ein Befestigungselement (13) bildet, das ein Stegblech (4) der Rahmenstrebe durchsetzt, und daß die der Verbreiterung zugeordneten Wandteile (8) so dünn sind, daß sie in Axialrichtung einknickbar (8a) sind, um mit ihren Endflächen in einer Ebene positioniert zu sein, die von derjenigen der Endfläche der Verbreiterung (7) verschieden ist.

7. Stabprofil nach Anspruch 6,
**dadurch gekennzeichnet**,
daß die Verbreiterung (7) massiv ist.

**Revendications**

1.- Procédé pour fixer un croisillon (3) sur un montant latéral (2), notamment dans un ratelier à câbles (1), dans lequel :
– le croisillon (3) est disposé avec sa surface terminale (6) contre l'âme (4) du montant latéral (2);
– le croisillon est fixé sur le montant latéral au moyen d'éléments de fixation (13) partant de la surface terminale du croisillon pour traverser l'âme du montant latéral;
– une contre-pièce (9) supportant l'âme dans la région de la surface terminale (6) du croisillon est positionnée au niveau de l'emplacement de fixation du croisillon (3), contre l'âme (4) du montant latéral (2); et
– l'âme (4) est supportée par la contre-pièce (9) dans la région de la surface terminale du croisillon, caractérisé en ce que :
– l'âme (4) est supportée par la contre-pièce (9) dans la région de la surface terminale sauf aux endroits des éléments de fixation (13) du croisillon, et
– la surface terminale plane (6) du croisillon est pressée depuis le côté opposé contre l'âme (4) du montant latéral, de telle sorte qu'une paroi (8) du croisillon est axialement écrasée (8a) dans la région supportée par la contre-pièce, mais perfore l'âme du montant latéral dans les régions non supportées par la contre-pièce, amenant ainsi les éléments de fixation (13) à traverser l'âme.

2.- Procédé selon la revendication 1, caractérisé en ce que le croisillon (3) est pressé contre le montant latéral (2) assez loin pour que les extrémités des éléments de fixation (13) du croisillon soient refoulées contre la contre-pièce (9).

3.- Procédé selon la revendication 1 ou la revendication 2, caractérisé en ce que le croisillon (3) est coupé perpendiculairement à son axe longitudinal et en ce que la surface terminale plane (6) du croisillon est pressée contre la surface plane de l'âme (4) du montant latéral (2).

4.- Jonction entre un croisillon et un montant latéral, comprenant des éléments de fixation (13) s'étendant depuis une surface terminale (6) du croisillon (3) à travers l'âme (4) du montant latéral (2) et fixés à cette âme sur son côté opposé, caractérisé en ce que les éléments de fixation (13) du croisillon (3) s'étendent à travers des trous (12) perforés par les éléments de fixation eux-mêmes dans l'âme et en ce que les parois (8) du croisillon entre les éléments de fixation sont axialement écrasées (8a) d'au moins l'épaisseur de l'âme.

5.- Jonction selon la revendication 4, caractérisé en ce que les parois (8) du croisillon (3) sont écrasées (8a) davantage que de l'épaisseur de l'âme (4) du montant latéral (2) et en ce que les extrémités dépassantes des éléments de fixation (13) ont été refoulées contre l'âme.

6.- Barreau profilé pour un croisillon creux (3) à fixer sur un montant latéral (2), caractérisé en ce qu'une paroi du barreau profilé a au moins un renflement continu axial (7) formant dans une jonction préparée un élément de fixation (13) s'étendant à travers l'âme (4) du montant latéral et en ce que les sections de paroi (8) associées au renflement sont si minces qu'elles peuvent être axialement écrasées (8a) pour être situées avec leurs surfaces terminales dans un plan différent de celui de la surface terminale du renflement (7).

7.- Barreau profilé selon la revendication 6, caractérisé en ce que le renflement (7) est massif.

FIG . 1

FIG . 2

FIG . 7

FIG . 8

7

FIG. 3

FIG. 4

FIG. 5

FIG. 6